# EUROPÄISCHE PATENTSCHRIFT

(11) **EP 1 447 590 B1**
(45) Veröffentlichungstag und Bekanntmachung des Hinweises auf die Patenterteilung: **27.04.2005**
(21) Anmeldenummer: 04000384.0
(22) Anmeldetag: 10.01.2004
(51) Int. Cl.: F16F 9/34

(54) **Blow-off-Ventil für einen hydraulischen Stossdämpfer**
Blow-off-valve for hydraulic damper
Soupape de dérivation pour amortisseur hydraulique

(30) Priorität: 11.02.2003 DE 10305386
(43) Veröffentlichungstag der Anmeldung: 18.08.2004
(73) Patentinhaber: ThyssenKrupp Bilstein GmbH, 58256 Ennepetal (DE)
(72) Erfinder: Hönig, Michael, 58256 Ennepetal (DE); Poetsch, Günter, Dipl.-Ing., 74372 Sersheim (DE); Kloss, Hendrik, Dipl.-Ing, 22457 Hamburg (DE); Mages, Stefan, Dipl.-Ing., 50354 Hürth (DE)
(74) Vertreter: Adams, Steffen

(56) Entgegenhaltungen:
- BE-A- 906 101
- DE-A- 2 340 987
- GB-A- 2 122 305
- US-A- 2 327 295
- US-A- 5 769 193
- US-A- 5 975 258

## Beschreibung

Die Erfindung betrifft ein Blow-off-Ventil für einen hydraulischen Stoßdämpfer nach dem Oberbegriff des Anspruchs 1.

Hydraulische Stoßdämpfer werden zur Dämpfung der Bewegung von über Federn angelenkten Radaufhängungen vorzugsweise bei Kraftfahrzeugen eingesetzt. Dabei erfolgt die Dämpfung durch das Durchpressen von Dämpfungsflüssigkeit durch vorzugsweise federbelastete Durchtritte im Arbeitskolben von einem Arbeitsraum in einen anderen Arbeitsraum des mit Dämpfungsflüssigkeit gefüllten Stoßdämpferrohres.

Beim schnellen Überfahren von Hindernissen ist die Dämpfung so groß, dass schlagartige Kräfte in die Radaufhängung eingeleitet werden, da in diesem Beanspruchungsfall der Stoßdämpfer zu hart dämpft. Von daher ist es nach der DE 23 40 987 bekannt, so genannte Blow-off-Ventile einzusetzen. Diese Blow-off-Ventile lassen einen Durchtritt der Dämpfungsflüssigkeit von dem kolbenstangenabgewandten Arbeitsraum in den kolbenstangenzugewandten Arbeitsraum zu. Das Blow-off-Ventil ist so konzipiert, dass es im normalen Betrieb des Stoßdämpfers nicht anspricht.

Nachteilig bei dem in der DE 23 40 987 A1 gezeigten Blow-off-System wird dieses mittels innerhalb der Kolbenstange angeordneter Steuermittel angesteuert und der hydraulische Durchtritt für das Blow-off-System geht auch durch den Querschnitt der Kolbenstange. Diese Lösung kann dann nicht verwendet werden, wenn in einer hohl gebohrten Kolbenstange bereits andere Schalt- oder Regelelemente oder auch elektrische oder pneumatische Leitungen angeordnet sind, wie dieses beispielsweise aus der DE 101 38 487 C1 bekannt ist.

Der Erfindung liegt die Aufgabe zugrunde, ein Blow-off-Ventil für einen hydraulischen Stoßdämpfer derartig zu gestalten, dass sowohl das Ventil selbst als auch die für seine Funktion erforderlichen hydraulischen Wege außerhalb der Kolbenstange bzw. einer Kolbenstangenverlängerung unterbringbar sind.

Diese Aufgabe wird mit den Merkmalen des Anspruchs 1 gelöst. Eine vorteilhafte Weiterbildung ist in Anspruch 2 beschrieben.

Die mit der Erfindung erzielten Vorteile bestehen insbesondere darin, dass Blow-off-Ventile auch für Stoßdämpfer mit Kolbenstangen eingesetzt werden können, die bereits mit Einbau- und Funktionsteilen in einer zentralen Bohrung versehen sind. Darüber hinaus vorteilhaft kann das Blow-off-Ventil bei jeder Kolbenstangen/Ventilkombination nachträglich eingebaut werden, wenn dieses aus Gründen der Konstruktion des Fahrwerks erforderlich wird.

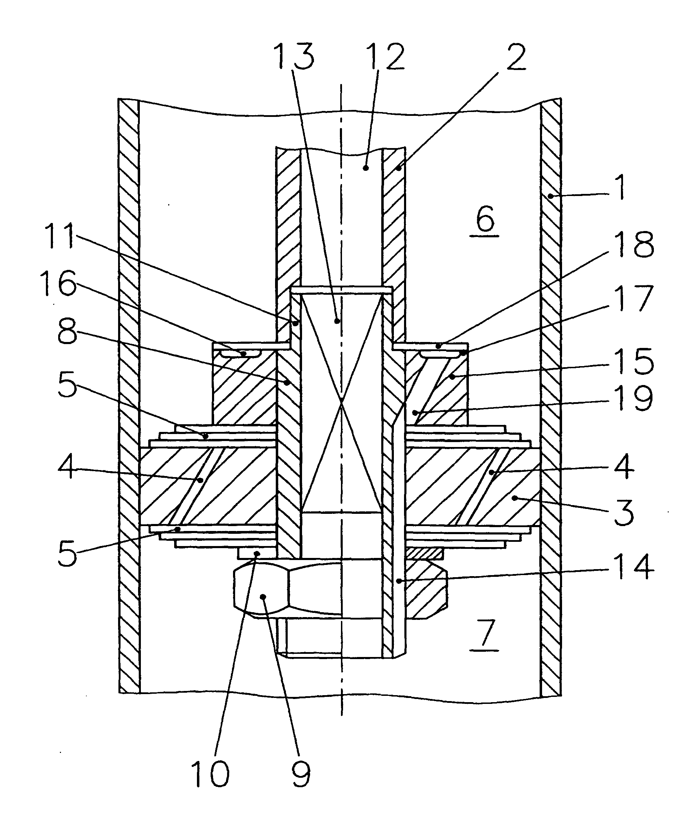

Ein Ausführungsbeispiel der Erfindung ist in der einzigen Figur dargestellt und wird im Folgenden näher beschrieben.

Die einzige Figur zeigt einen Schnitt durch einen Stoßdämpfer im Bereich des Arbeitskolbens.

Der Stoßdämpfer weist ein Stoßdämpferrohr 1 auf, das mit Dämpfungsflüssigkeit gefüllt ist. Eine Kolbenstange 2, an dessen Ende ein Arbeitskolben 3 angebunden ist, taucht oszillierend in das Stoßdämpferrohr 1 ein. Der Arbeitskolben 3 ist mit Durchbrüchen 4 und als Scheiben 5 ausgebildeten Dämpfungsventilen versehen. Er trennt den Innenraum des Stoßdämpfers in zwei Arbeitsräume 6, 7. Die Strömung der Dämpfungsflüssigkeit in Zugrichtung der Kolbenstange 2 erfolgt durch den Arbeitskolben 3 vom oberen Arbeitsraum 6 in den unteren Arbeitsraum 7 und wird hierbei durch die Durchbrüche 4 und als Scheiben 5 ausgebildete Dämpfungsventile gebremst. In umgekehrter Weise durchströmt die Dämpfungsflüssigkeit den Arbeitskolben 3 in Druckrichtung der Kolbenstange 2 vom unteren Arbeitsraum 7 in den oberen Arbeitsraum 6.

Im Ausführungsbeispiel ist die Kolbenstange 2 durch eine Kolbenstangenverlängerung 8 verlängert. Auf dieser Kolbenstangenverlängerung 8 sind der Arbeitskolben 3 und die Scheiben 5 angebracht. Die Kolbenstangenvedängerung 8 trägt unter anderem den Arbeitskolben 3 und die Scheiben 5. Diese werden am unteren Ende mittels einer Mutter 9 und einer zwischengelegten Scheibe 10 verschraubt. Die Kolbenstangenverlängerung 8 ist mit einem Absatz 11 in die hohl ausgebildete Kolbenstange 2 eingeschraubt.

Die zentrale Bohrung 12 in der hohlen Kolbenstange 2 ist durch schematisch dargestellte Funktionselemente 13 ausgefüllt.

Die Kolbenstangenverlängerung ist im Bereich von aufgesetztem Arbeitskolben 3, Scheiben 5, Mutter 9 und Scheibe 10 mit wenigstens einer axial verlaufenden, sich rillenförmig nach innen erstreckenden Nut 14 ausgebildet. Diese Nut läuft oberhalb der obersten Scheibe 5 in einem Kranz 15 aus. Dieser Kranz 15 kann, wie im Ausführungsbeispiel, als separates Teil auf die Kolbenstangenverlängerung 8 aufgesetzt oder auch Teil der Kolbenstangenverlängerung 8 sein. Im Ausführungsbeispiel ist nur eine Nut 14 gezeigt. Üblicherweise werden jedoch wenigstens vier Nuten, verteilt auf dem Umfang, angeordnet.

Der Kranz 15 ist an der arbeitskolbenabgewandten Seite mit einem umlaufenden Ringkanal 16 ausgebildet, der eine außen umlaufende Auflage 17 aufweist. Oberhalb des Ringkanals 16, aufliegend auf der Auflage 17, ist eine weitere federnde Scheibe 18 angeordnet. Die Scheibe 18 weist gegenüber den Scheiben 5 eine größere Biegefestigkeit auf. Der Ringkanal 16 ist über Durchbrüche 19 mit den Nuten 14 hydraulisch verbunden. Anstatt einer Scheibe 18 kann der Ringkanal 16 auch durch ein Scheibenpaket entsprechend den Scheiben 5 abgedeckt sein.

Die Federsteifigkeit der Scheibe 18 ist so bemessen, dass die Federscheibe 18 während des Normalbetriebes nicht von der Auflage 17 abhebt. Im Normalbetrieb erfolgt die Dämpfungsregelung über die Scheiben 5. Nur im Falle eines Stoßes auf den Stoßdämpfer, hervorgerufen durch das Überfahren eines größeren Gegenstandes mit hoher Geschwindigkeit, spricht das durch die Scheibe 18 und die Auflage 17 gebildete Blow-off-Ventil an. In diesem Fall erfolgt ein Einfahren der Kolbenstange 2 in das Stoßdämpferrohr 1 und eine schlagartige Erhöhung des Druckes im unteren Arbeitsraum 7. Nur in diesem Fall erfolgt ein Durchströmen der Dämpfungsflüssigkeit durch die Nut 14, den Durchbruch 19 und den Ringkanal 16, wobei dann die Scheibe 18 von der Auflage 17 abhebt.

Alternativ zu der in der Zeichnung dargestellten Ausbildungsform kann die Nut 14 auch anstatt durch die Kolbenstangenverlängerung 8 durch die Scheiben 5, den Arbeitskolben 3, die Scheibe 10 und die Mutter 9 gelegt werden. Das hat jedoch den Nachteil, dass diese Teile dann genau zueinander fluchten müssen und kommt daher nur dann in Frage, wenn in der Kolbenstangenverlängerung 8 bzw. der Kolbenstange 2 kein ausreichendes Material zur Verfügung steht, um die Nut 14 hier einzubringen.

### Bezugszeichenliste

- 1.: Stoßdämpferrohr
- 2.: Kolbenstange
- 3.: Arbeitskolben
- 4.: Durchbruch
- 5.: Scheibe
- 6.: Arbeitsraum
- 7.: Arbeitsraum
- 8.: Kolbenstangenverlängerung
- 9.: Mutter
- 10.: Scheibe
- 11.: Absatz
- 12.: Bohrung
- 13.: Funktionselement
- 14.: Nut
- 15.: Kranz
- 16.: Ringkanal
- 17.: Auflage
- 18.: Scheibe
- 19.: Durchbruch

## Patentansprüche

1. Blow-off-Ventil für einen hydraulischen Stoßdämpfer mit einem mit Dämpfungsflüssigkeit gefüllten Stoßdämpferrohr (1) und einem am Ende einer oszillierend in das Stoßdämpferrohr (1) eintauchenden Kolbenstange (2) angeordneten, das Stoßdämpferrohr (1) in zwei Arbeitsräume (6, 7) teilenden, mit Durchbrüchen (4) und Dämpfungsventilen versehenen Arbeitskolben (3), wobei innerhalb der hohl ausgebildeten Kolbenstange (2) oder Kolbenstangenverlängerung Funktionselemente (13) angeordnet sind, **dadurch gekennzeichnet, dass** der Außenmantel der Kolbenstange (2) oder der Kolbenstangenverlängerung (8) mit wenigstens einer axial verlaufenden, sich rillenförmig nach innen erstreckenden Nut (14) ausgebildet ist, deren Länge wenigstens der Höhe des Arbeitskolbens (3) einschließlich seiner Befestigungs- und/oder Funktionselemente entspricht oder die Innenbohrung des auf der Kolbenstange (2) oder der Kolbenstangenverlängerung (8) befestigten Arbeitskolbens (3) und seiner Befestigungs- und/oder Funktionselemente mit einer entsprechenden nach außen gerichteten Nut (14) ausgebildet sind und die Nut (14) druckseitig mit einem federbelasteten Ventilkörper verschlossen ist.

2. Blow-off-Ventil nach Anspruch 1, **dadurch gekennzeichnet, dass** die wenigstens eine Nut (14) in einem außerhalb des Arbeitskolbens (3) befindlichen Ringkanal (16) mit einer umlaufenden Auflage (17) ausläuft und der federnde Ventilkörper als Scheibe (18) ausgebildet ist, die randseitig auf der Auflage (17) aufliegt.

## Claims

1. Blow-off valve for a hydraulic shock absorber having a shock absorber tube (1) filled with a damping fluid and having a working piston (3) disposed at the end of a piston rod (2) which is received in an oscillating manner into the shock absorber tube (I), which working piston divides the shock absorber tube (1) into two working chambers (6,7) and is provided with apertures (4) and damping valves, wherein function elements (13) are disposed inside the hollow piston rod (2) or piston rod extension, **characterised in that** the outer periphery of the piston rod (2) or the piston rod extension (8) is formed with at least one axially extending, groove-shaped, inwardly extending groove (14), the length of which groove corresponds at least to the height of the working piston (3) including its attachment and/or function elements or the inner bore of the working piston (3) attached on the piston rod (2) or the piston rod extension (8) and its attachment and/or function elements are formed with a corresponding outwardly directed groove (14) and the groove (14) is closed on the pressure side by a spring-loaded valve body.

2. Blow-off valve as claimed in claim 1, **characterised in that** the at least one groove (14) runs out to become an annular channel (16) which is located outside the working piston (3) and has a circumferential support (17) and the resilient valve body is formed as a disc (18) which lies at the edge side on the support (17).

## Revendications

1. Soupape de décharge pour un amortisseur hydraulique avec un tube d'amortisseur (1) rempli de fluide d'amortissement et un piston de travail (3) qui, pourvu de passages (4) et de soupapes d'amortissement et disposé à l'extrémité d'une tige de piston (2) qui plonge de manière oscillante dans le tube d'amortisseur (1), divise ledit tube d'amortisseur (1) en deux chambres de travail (6, 7), des éléments fonctionnels (13) étant disposés à l'intérieur de la tige de piston (2) de conception creuse, ou du prolongement (8) de la tige de piston, **caractérisée en ce que** l'enveloppe extérieure de la tige de piston (2) ou du prolongement (8) de la tige de piston est exécutée avec au moins une rainure (14) s'étendant dans le sens axial, en forme de gorge orientée vers l'intérieur, dont la longueur correspond au moins à la hauteur du piston de travail (3) y compris ses éléments de fixation et / ou ses éléments fonctionnels, ou **en ce que** l'alésage intérieur du piston de travail (3), fixé à la tige de piston (2) ou au prolongement (8) du piston, et de ses éléments de fixation et / ou fonctionnels est exécuté avec une rainure correspondante (14), dirigée vers l'extérieur, et **en ce que** ladite rainure (14) est fermée côté pression par un corps de soupape chargé par un ressort.

2. Soupape selon la revendication 1, **caractérisée en ce que** la rainure (14), au moins, débouche dans un canal annulaire (16), situé à l'extérieur du piston de travail (3), avec un appui périphérique, et que le corps de soupape est conçu en forme de plaque (18) qui porte contre l'appui (17), côté bord.
